# EUROPÄISCHE PATENTSCHRIFT

(11) **EP 2 602 201 B1**
(45) Veröffentlichungstag und Bekanntmachung des Hinweises auf die Patenterteilung: **22.04.2015**
(21) Anmeldenummer: 12190809.9
(22) Anmeldetag: 31.10.2012
(51) Int. Cl.: B65C 3/06, B29C 55/28

(54) **Verfahren zum Etikettieren von Behältern mit Etikettenhülsen**
Method for labelling containers with stretch sleeves
Procédé pour poser des manchons de films étirables sur des emballages

(30) Priorität: 05.12.2011 DE 102011087728
(43) Veröffentlichungstag der Anmeldung: 12.06.2013
(73) Patentinhaber: Krones AG, 93073 Neutraubling (DE)
(72) Erfinder: Frankenberger, Dipl.-Ing.Günter, 93073 Neutraubling (DE); Scherl, Stefan, 93073 Neutraubling (DE); Langosch, Martin, 93073 Neutraubling (DE); Holzer, Dipl.-Ing.Christian, 93073 Neutraubling (DE); Kipper, Gundolf, 93073 Neutraubling (DE)
(74) Vertreter: Grünecker Patent- und Rechtsanwälte PartG mbB

(56) Entgegenhaltungen:
- EP-A2- 0 547 754
- WO-A1-2008/076718
- WO-A1-2011/114524
- US-A- 5 715 651

## Beschreibung

Die Erfindung betrifft ein Verfahren zum Etikettieren von Behältern mit Etikettenhülsen. Behälter, wie beispielsweise Getränkeflaschen, lassen sich unter anderem durch das Aufziehen schlauchförmiger Folienhülsen über die Behältermantelfläche etikettieren. Beispielsweise beschreibt die WO 2008/076718 eine Vorrichtung zum Etikettieren dreidimensional gewölbter Behälteroberflächen mit hochelastischen Folienhülsen, bei der auf einem Etikettierrad umlaufende Etikettierstationen mit Spreizeinheiten zum Aufnehmen und Spreizen der Folienhülsen vorgesehen sind. Die Spreizeinheiten umfassen mehrere im Wesentlichen parallel zueinander verlaufende und umfänglich um eine zentrale Ausnehmung gruppierte Spreizfinger. Diese sind bezüglich der zentralen Ausnehmung radial verschiebbar und können soweit auseinander bewegt werden, dass eine über die Spreizfinger gestülpte Folienhülse von den Spreizfingern aufgespannt wird und eine zu etikettierende Flasche durch die zentrale Ausnehmung nach oben in die gespreizte Folienhülse geschoben werden kann.

Die WO 2008/076718 beschreibt ferner ein Verfahren gemäß dem Oberbegriff von Anspruch 1 wobei die Folienhülsen von einem Etikettenspender auf die zusammengefahrenen Spreizfinger geschossen werden und nach dem Auseinanderfahren der Spreizfinger im gedehnten Zustand durch Anlegen eines Unterdrucks mittels Ansaugöffnungen auf der Außenseite der Spreizfinger auf diesen fixiert werden. Nach Erreichen einer für die nachfolgende Etikettierung geeigneten Spreizposition der Spreizfinger wird anstelle des Unterdrucks ein Überdruck angelegt, um die Folienhülsen von den Spreizfingern abzustoßen und die Übergabe der Folienhülsen an die zu etikettierenden Flaschen beim weiteren Vorschieben der Flaschen zu erleichtern.

Nachteilig ist bei diesem Verfahren jedoch, dass die Folienhülsen aufgrund der geforderten hohen Maschinenleistungen mit so hoher Geschwindigkeit auf die zusammengefahrenen Spreizfinger geschossen werden, dass die Folienhülsen zum einen beim Anschlagen an den Spreizeinheiten von den Spreizfingern herunterspringen können und sich zum anderen die Drehlage der Folienhülsen beim Spenden und Fixieren auf den Spreizfingern ändern kann. Anders gesagt, besteht der Bedarf für Etikettierverfahren und entsprechende Vorrichtungen, bei denen die Etikettenhülsen ihre Drehlage beim Spenden beibehalten, bei denen die Etikettenhülsen auf den Spreizeinheiten in einer korrekten Höhe fixiert sind, und bei denen ein Herunterspringen der Etikettenhülsen von den Spreizeinheiten beim Spenden vermieden wird.

Die gestellte Aufgabe wird mit einem Verfahren nach Anspruch 1 gelöst. Demnach werden die Etikettenhülsen von oben auf umlaufende Spreizeinheiten mit auseinander bewegbaren Spreizsegmenten geschossen, und es werden erfindungsgemäß die Etikettenhülsen vor dem unteren Anschlagen an den Spreizeinheiten durch Ansaugen an wenigstens einem der Spreizsegmente und/oder durch Auseinanderbewegen der Spreizsegmente abgebremst. Nachfolgend ist unter einem Anschlagen der Etikettenhülsen ein Anschlagen gegen eine an den Spreizeinheiten vorgesehene untere Auflageplatte oder dergleichen zu verstehen, im Gegensatz zu einem seitlichen Mitnehmen der Etikettenhülsen durch die Spreizeinheiten. Durch den unteren Anschlag ist vorzugsweise eine Höhenlage der Etikettenhülse bezüglich der Spreizeinheiten für die nachfolgende Etikettierung vorgegeben. Das Abbremsen erfolgt insbesondere durch Gleitreibung zwischen den Spreizsegmenten und den Etikettenhülsen.

Durch Ansaugen lässt sich eine geeignete Normalkraft der Gleitreibung in Richtung der Spreizsegmente erzeugen. Dadurch lässt sich insbesondere eine Normalkraftkomponente erzeugen, die vom Dehnungsverhalten der Etikettenhülse unabhängig ist.

Die Gleitreibung kann aber auch allein oder zusätzlich durch das Auseinanderfahren der Spreizsegmente erzeugt werden. Ist der Außendurchmesser der Spreizsegmente oder ein Umfang um die Spreizsegmente kleiner als der Innendurchmesser oder der lichte Querschnitt der Etikettenhülse im ungedehnten Zustand, so kann die Etikettenhülse insbesondere auf eine geeignete Restgeschwindigkeit abgebremst werden. Ist der Außendurchmesser der Spreizsegmente oder ein Umfang um die Spreizsegmente größer oder gleich dem Innendurchmesser oder dem lichten Querschnitt der Etikettenhülse im ungedehnten Zustand, kann die Etikettenhülse insbesondere auf den Spreizsegmenten in einer vorgegebenen Höhenlage fixiert werden, beispielsweise zur Beruhigung oder Stabilisierung der Etikettenhülse auf den Spreizeinheiten.

Mit Hilfe der Gleitreibung lässt sich die Geschwindigkeit der Etikettenhülsen soweit reduzieren, dass ein Zurückspringen der Etikettenhülsen von den Spreizeinheiten vermieden werden kann. Außerdem trägt die Gleitreibung dazu bei, dass die Etikettenhülsen beim Spenden an den Spreizsegmenten entlang geführt werden, so dass einer Änderung der Drehlage der Etikettenhülsen beim Spenden entgegengewirkt werden kann. Durch das Ansaugen der Etikettenhülsen lässt sich zum Einen die Gleitreibung verstärken, zum Anderen können die Etikettenhülsen in einer vorgegebenen Höhenlage auf den Spreizeinheiten fixiert werden. Die Etikettenhülsen könnten auch unmittelbar nach dem Anschlagen angesaugt werden, um ein Zurückspringen der Etikettenhülsen von den Spreizeinheiten zu vermeiden.

Vorzugsweise wird an wenigstens einem der Spreizsegmente ein Unterdruck angelegt, um die Etikettenhülsen vor dem Anschlagen auf dem Spreizsegment zu fixieren. Dadurch kann ein Zurückspringen der Etikettenhülsen beim Anschlagen besonders zuverlässig vermieden werden und die Drehlage beim Spenden der Etikettenhülsen beibehalten werden.

Vorzugsweise wird der Unterdruck nach dem Fixieren der Etikettenhülsen und vor dem Anschlagen abgeschaltet. Dies ermöglicht ein Nachuntenrutschen oder Fallen und ein sanftes Anschlagen der Etikettenhülsen.

Vorzugsweise werden die Spreizsegmente auf Kontakt mit den Etikettenhülsen auseinander gefahren, um die Etikettenhülsen vor dem Anschlagen der Etikettenhülsen auf den Spreizsegmenten zu fixieren. Beispielsweise lässt sich ein umfänglich gleichmäßiger Kontakt der Etikettenhülsen mit den Spreizsegmenten herstellen, um die Etikettenhülsen mittels Gleitreibung vollständig abzubremsen. Die Spreizsegmente können aber auch auseinander gefahren werden, um den Abstand zu den Etikettenhülsen lediglich zu reduzieren und ein Ansaugen der Etikettenhülsen zu erleichtern. Ein Abbremsen der Etikettenhülsen ist somit durch geeignete Ansteuerung ohne zusätzliche strukturelle Elemente möglich. Ein erfindungsgemäßes Auseinanderfahren lässt sich bei elektrisch ansteuerbaren Antriebseinheiten für die Spreizsegmente besonders einfach realisieren.

Unter einem erfindungsgemäßen Kontakt zwischen den Etikettenhülsen und den Spreizsegmenten ist zu verstehen, dass der Kontakt nicht nur durch das Mitnehmen der Etikettenhülsen durch einzelne, vorlaufende Spreizsegmente aufgrund einer seitlichen Relativbewegung zwischen den Spreizeinheiten und den gespendeten Etikettenhülsen hergestellt wird, sondern durch ein Auseinanderfahren der Spreizsegmente aus einer inneren Spendestellung der Spreizsegmente und/oder durch Ansaugen hergestellt oder zumindest verstärkt wird.

Vorzugsweise wird nach dem Fixieren der Etikettenhülsen ein Luftspalt zwischen den Spreizsegmenten und den Etikettenhülsen bereit gestellt. Dadurch können die Etikettenhülsen gegen einen Anschlag auf den Spreizeinheiten nach unten rutschen oder fallen.

Vorzugsweise werden die Etikettenhülsen innerhalb von höchstens 500 ms, insbesondere höchstens 200 ms, nach dem unteren Anschlagen durch Auseinanderbewegen der Spreizsegmente aufgespannt. Dadurch lassen sich die Etikettenhülsen im Anschlag und in einer vorgegebenen Drehlage auf den Spreizeinheiten fixieren.

Vorzugsweise werden die Etikettenhülsen angesaugt, während sich der untere Rand der Etikettenhülsen in der unteren Hälfte der Spreizsegmente befindet. Dadurch lassen sich die Etikettenhülsen in einer inneren Spendestellung der Spreizeinheiten zuverlässig einfangen, bevor sie abgebremst werden.

Das Ansaugen lässt sich beispielsweise mit Hilfe einer geeigneten Steuervorrichtung und den Spreizeinheiten zugeordneten Ventileinheiten schalten. Es wäre auch denkbar, die Höhe des Unterdrucks zu regeln. Mit Hilfe geeigneter Steuereinrichtungen lassen sich die Schaltzeitpunkte des Ansaugens mit der Transportbewegung der Spreizeinheiten und der Spreizbewegung der Spreizsegmente synchronisieren.

Vorzugsweise werden die Spreizsegmente auseinander gefahren, während sich der untere Rand der Etikettenhülsen in der unteren Hälfte der Spreizsegmente befindet. Dadurch lassen sich die Etikettenhülsen in einer inneren Spendestellung der Spreizeinheiten zuverlässig einfangen, bevor sie abgebremst werden.

Vorzugsweise ist die vertikale Geschwindigkeit der Etikettenhülsen beim Aufschießen mindestens doppelt so hoch wie beim unteren Anschlagen gegen die Spreizeinheiten. Dadurch lässt sich ein Zurückspringen der Etikettenhülsen vermeiden.

Vorzugsweise sind die Etikettenhülsen Stretch-Sleeves, deren Grundmaterial insbesondere als LDPE besteht. Derartige Etikettenhülsen eigenen sich besonders gut für die Etikettierung komplexer Behälterformen. Das erfindungsgemäße Verfahren eignet sich aber auch für Schrumpfhülsen und dergleichen.

Eine Vorrichtung, die nicht Bestandteil der Erfindung ist, umfasst ferner: umlaufende Spreizeinheiten mit auseinander bewegbaren Spreizsegmenten, an denen Luftkanäle zum Ansaugen der Etikettenhülsen vorgesehen sind; und ein über der Umlaufbahn der Spreizeinheit angeordneter Etikettenspender, mit dem sich die Etikettenhülsen über die Spreizsegmente schießen lassen. Dabei lassen sich die Spreizsegmente zum Abbremsen der Etikettenhülsen durch Gleitreibung vor dem unteren Anschlagen der Etikettenhülsen auseinander bewegen. Alternativ oder ergänzend lässt sich an die Luftkanäle vor dem unteren Anschlagen der Etikettenhülsen an den Spreizeinheiten ein Unterdruck anlegen.

Als Anschlag ist insbesondere eine an den Spreizeinheiten, beispielsweise an den Spreizsegmenten, vorgesehene untere Auflageplatte oder dergleichen vorgesehen. Dadurch können die Etikettenhülsen nach dem Spenden bis zum Aufbringen auf den Behältern in einer vorgegebenen Etikettierposition auf den Spreizeinheiten gedehnt werden.

Eine besonders günstige Ausführungsform der Vorrichtung umfasst ferner eine Steuereinrichtung zum Ansteuern der Spreizsegmente derart, dass sich die Spreizsegmente vor dem Anschlagen der Etikettenhülsen in einer Abbremsstellung auseinanderfahren lassen, in der die Etikettenhülsen mittels Gleitreibung an den Spreizsegmenten abgebremst werden. Durch Anfahren der Abbremsstellung lässt sich eine definierte Normalkraft zwischen den Etikettenhülsen und den Spreizsegmenten erzeugen, um die Etikettenhülsen mittels einer vorgegebenen Gleitreibungskraft abzubremsen. Es wäre auch denkbar, für die Abbremsstellung einen Bereich vorzugeben, innerhalb dessen die Spreizsegmente für das Abbremsen positioniert werden.

Bei einer besonders günstigen Ausführungsform der Vorrichtung ist ferner eine Steuereinrichtung zum Schalten des Unterdrucks derart vorgesehen, dass sich die Etikettenhülsen vor dem Anschlagen in einer Ruhestellung auf den Spreizsegmenten fixieren lassen. Unter der Ruhestellung ist hierbei ein Zustand zu verstehen, in dem die Etikettenhülse in der Aufschießrichtung vorübergehend zur Ruhe kommt, so dass sich nach dem Lösen der Fixierung ein Zurückspringen der Etikettenhülsen beim Anschlagen gegen die Spreizeinheiten vermeiden lässt. Außerdem wird die Drehlage der Etikettenhülse in der Ruhestellung fixiert. Bei einer besonders günstigen Ausführungsform der Vorrichtung ist ferner eine Steuereinrichtung zum Schalten des Unterdrucks vorgesehen, so dass die Etikettenhülsen vor dem Anschlagen mittels Gleitreibung an den Spreizsegmenten abgebremst werden. Dadurch lässt sich die Bewegungsenergie in der Aufschießrichtung wenigstens soweit reduzieren, dass ein Zurückspringen der Etikettenhülse beim Anschlagen vermieden wird. Außerdem lässt sich die Drehlage der gespendeten Etikettenhülse stabilisieren.

Vorzugsweise ist der Etikettenspender feststehend, und die Spreizeinheiten sind an einem Etikettierrad umlaufend gelagert. Dies ermöglicht besonders hohe Maschinenleistungen. Es wäre auch denkbar, die Spreizeinheiten auf einer teilweise linear verlaufenden Umlaufbahn zu lagern.

Eine bevorzugte Ausführungsform der Erfindung ist in den Zeichnungen dargestellt. Es zeigen:
- Fig. 1: eine Draufsicht auf eine Etikettiermaschine mit Spreizeinheiten und einem Etikettenspender zum Ausführen des erfindungsgemäßen Verfahrens;
- Fig. 2: eine Ausführungsform einer Spreizeinheit zum Ausführen des erfindungsgemäßen Verfahrens;
- Fig. 3: eine schematische Seitenansicht einer Spreizvorrichtung beim erfindungsgemäßen Spenden einer Etikettenhülse;
- Fig. 4: ein Diagramm zur Verdeutlichung eines möglichen zeitlichen Ablaufs der erfindungsgemäßen Spreizbewegung und Ansaugung beim Spenden einer Etikettenhülse; und
- Fig. 5: ein Diagramm zur Verdeutlichung eines alternativen zeitlichen Ablaufs der erfindungsgemäßen Spreizbewegung und Ansaugung beim Spenden einer Etikettenhülse.

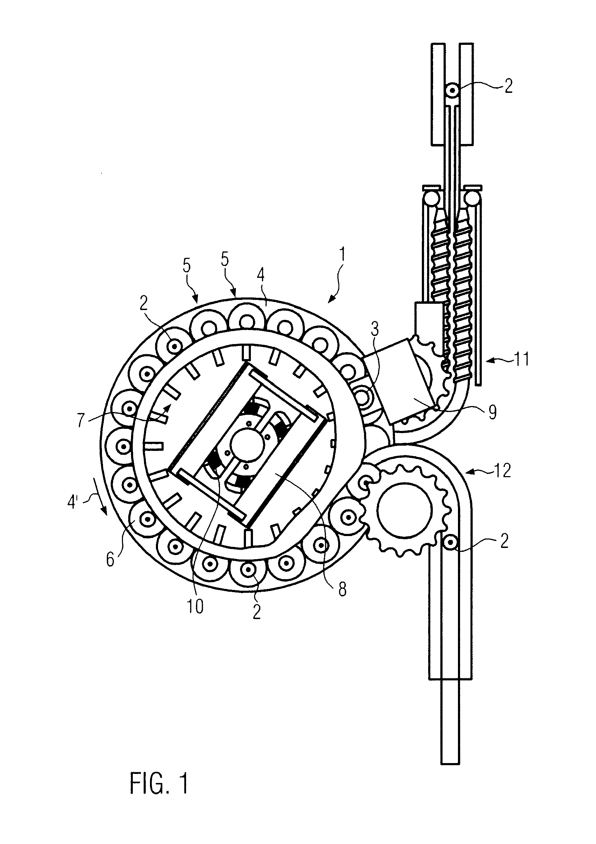

Wie die Fig. 1 erkennen lässt, umfasst die Vorrichtung 1 zum erfindungsgemäßen Etikettieren von Behältern 2 mit Etikettenhülsen 3 mehrere umfänglich gleichmäßig auf einem Etikettierrad 4 verteilte Etikettierstationen 5, die jeweils Spreizeinheiten 6 zum Aufnehmen und Spreizen der Etikettenhülsen 3 umfassen sowie schematisch angedeutete Hubeinheiten 7 zum Entnehmen der etikettierten Behälter 2.

Im Bereich des Etikettierrads 4 ist ferner eine Steuereinheit 8 vorgesehen sowie ein Etikettenspender 9, mit dem die Etikettenhülsen 3 in bekannter Weise von einem endlosen Etikettenschlauch abgetrennt und auf die unter dem Etikettenspender 9 hindurch laufenden Spreizeinheiten 6 geschossen werden können. Schematisch angedeutet sind ferner Ventilblöcke 10 im Bereich des Etikettierrads 4, mit denen wahlweise ein Unterdruck oder Überdruck an den Spreizeinheiten 6 zum Ansaugen oder Abstoßen der auf den Spreizeinheiten 6 befindlichen Etikettenhülsen 3 geschaltet werden kann. Der Vollständigkeit halber sind ein Einlaufsternrad 11 zum Zuführen der zu etikettierenden Behälter 2 angedeutet sowie ein Auslaufsternrad 12 zum Entnehmen und Weiterleiten der etikettierten Behälter 2.

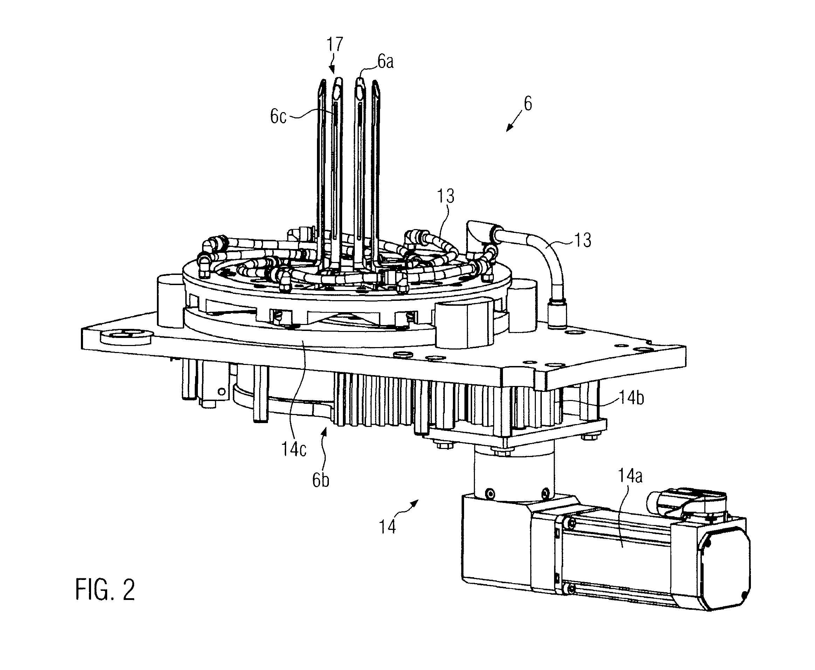

Die Fig. 2 zeigt eine Spreizeinheit 6 im Detail. Demnach umfasst diese mehrere Spreizsegmente 6a, die beispielsweise fingerförmig ausgebildet sind und um eine zentrale Ausnehmung 6b herum nach außen, insbesondere radial, verschiebbar angeordnet sind. Der zu etikettierende Behälter 2 kann durch eine Hubeinrichtung in bekannter Weise von unten in die zentrale Ausnehmung 6b eingeführt werden und nach Spreizen der Spreizsegmente 6a durch diese bis in eine geeignete Etikettierposition nach oben gehoben werden. An den Spreizsegmenten 6a sind jeweils sich zur Außenseite hin öffnende Luftkanäle 6c vorgesehen, durch die wahlweise ein Unterdruck oder ein Überdruck angelegt werden kann, um die Etikettenhülsen 3 anzusaugen oder von den Spreizsegmenten 6a abzustoßen. Zu diesem Zweck sind an den Spreizeinheiten 6 Druckluftleitungen 13 vorgesehen. In der Fig. 2 ist ferner eine Antriebseinheit 14 für die Spreizsegmente 6a gezeigt. Diese umfasst beispielsweise einen Antriebsmotor 14a, ein Getriebe 14b und eine Steuerscheibe 14c, um die Spreizsegmente 6a durch Ansteuerung des Antriebsmotors 14a in geeigneter Weise auseinander oder zusammen zu fahren.

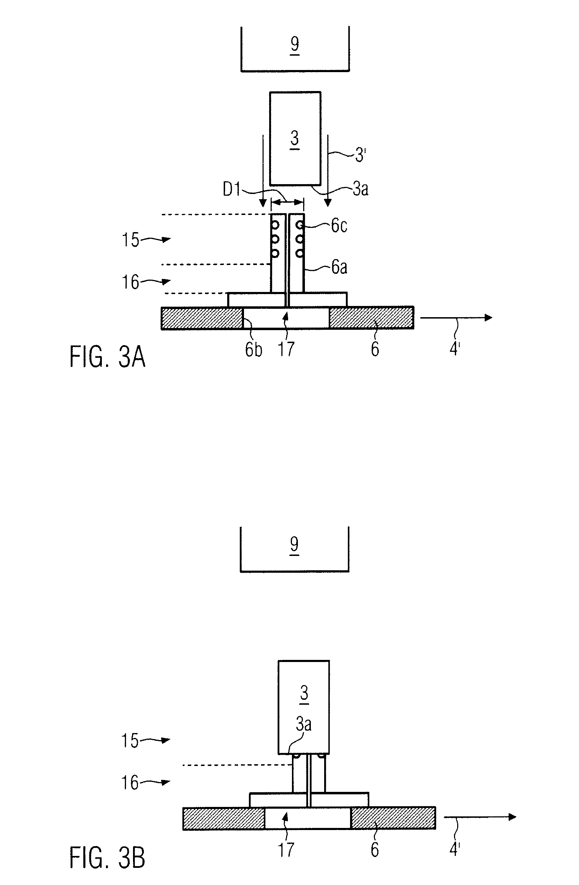

Die Fig. 3A bis 3F verdeutlichen schematisch die Funktionsweise der Spreizeinheiten 6 beim Spenden einer Etikettenhülse 3. Demnach laufen die Spreizeinheiten 6 entlang der durch einen Pfeil angedeuteten Transportrichtung 4' des Etikettierrads 4 unter dem Etikettenspender 9 hindurch.

Hierbei zeigt die Fig. 3A einen ersten Zustand vor dem Einfangen der Etikettenhülse 3 mit den Spreizsegmenten 6a. Diese sind zum Einfangen in einer inneren Einfangstellung 17 mit einem ersten Außendurchmesser D1 über der zentralen Ausnehmung 6b der Spreizeinheit 6 zusammengefahren. Schematisch angedeutet sind ferner die sich nach außen hin öffnenden Luftkanäle 6c der Spreizsegmente 6a. Die Etikettenhülsen 3 werden in einer vorzugsweise orthogonal zur Transportrichtung 4' ausgerichteten Spenderichtung 3' von oben auf die Spreizsegmente 6a geschossen.

An den Spreizsegmenten 6a ist zum besseren Verständnis einer Einfangphase T1 zum Einfangen der Etikettenhülsen 3 mit den Spreizsegmenten 6a sowie einer Abbremsphase T2 zum Abbremsen der Etikettenhülsen 3 ein oberer Abschnitt 15 sowie ein unterer Abschnitt 16 der Spreizsegmente 6a schematisch angedeutet. Der untere Rand 3a der Etikettenhülse 3 befindet sich während der Einfangphase T1 innerhalb des oberen Abschnitts 15 und während der Abbremsphase T2 innerhalb des unteren Abschnitts 16. Innerhalb der Abbremsphase T2 wird an den Luftkanälen 6c ein Unterdruck angelegt und/oder ein Kontakt der Spreizsegmente 6a mit der Etikettenhülse 3 hergestellt. Der untere Abschnitt 16 liegt vorzugsweise innerhalb der unteren Hälfte der Spreizsegmente 6a. Möglich wäre beispielsweise aber auch eine Variante, bei der sich der obere Abschnitt 15 nur über das obere Drittel der Spreizsegmente 6a erstreckt und der untere Abschnitt 16 über die verbleibenden zwei Drittel.

Definitionsgemäß zeigt die Fig. 3B die Spreizeinheit 6 und die Etikettenhülse 3 während der Einfangphase T1, wobei die Spreizsegmente 6a vorzugsweise in der inneren Einfangstellung 17 zusammen gefahren sind. Wie die Fig. 3B ferner verdeutlicht, hat sich die Spreizeinheit 6 bezüglich des Etikettenspenders 9 entlang der Transportrichtung 4' weiterbewegt, so dass die Etikettenhülse 3 von den Spreizsegmenten 6a eingefangen und in der Transportrichtung 4' mitgenommen wird.

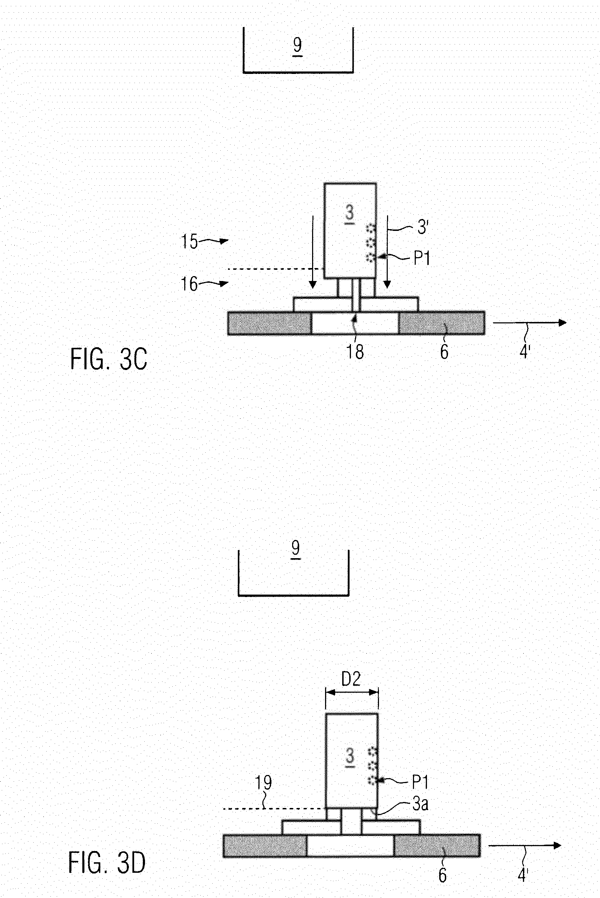

Die Fig. 3C zeigt die Spreizeinheit 6 und die Etikettenhülse 3 in der Abbremsphase T2. In der Abbremsphase T2 wird die Etikettenhülse 3 mittels Gleitreibung an wenigstens einem der Spreizsegmente 6a vor dem Anschlagen gegen wenigstens eine an der Spreizeinheit 6 vorgesehene untere Auflageplatte 6d oder dergleichen abgebremst. Geeignete Auflageplatten 6d können beispielsweise durch die Sockelabschnitte der Spreizsegmente 6a gebildet werden. Die Bremswirkung wird bei einer bevorzugten Variante des erfindungsgemäßen Verfahrens durch das Anlegen eines Unterdrucks P1 an die Luftkanäle 6c erzielt. Hierbei kann die Bremswirkung durch ein Auseinanderbewegen der Spreizsegmente 6a in eine Abbremsstellung 18 unterstützt werden. Es wäre aber auch möglich, die Spreizsegmente 6a so weit auseinander zu bewegen, dass die für das erfindungsgemäße Abbremsen benötigte Gleitreibung in der Abbremsstellung 18 auch ohne ein Ansaugen durch die Luftkanäle 6c erzielt werden kann.

Vorzugsweise wird das Anlegen des Unterdrucks P1 durch die Schaltzeitpunkte der zugeordneten Ventile definiert.

Durch ein Ansaugen vor dem Anschlagen der Etikettenhülsen 3 kann ein abbremsender Effekt erzielt werden, der sich insbesondere unabhängig von dem Dehnungsverhalten der Etikettenhülse 3 einstellen lässt. Das Abbremsen der Etikettenhülse 3 kann bei Bedarf durch Zuschalten und Abschalten des Unterdrucks P1 variabel optimiert werden, beispielsweise auch unmittelbar vor oder beim Anschlagen gegen die Auflageplatte 6d. Durch Zuschalten des Unterdrucks P1 unmittelbar nach dem Anschlagen der Etikettenhülse 3 ließe sich ein Zurückspringen der geeignet abgebremsten Etikettenhülse 3 von der Anschlagsposition ebenso verhindern.

Die Fig. 3D zeigt die Etikettenhülse 3 nach der Abbremsphase T2 in einer vertikal auf der Spreizeinheit 6 fixierten Ruhestellung 19. Die Fixierung der Etikettenhülse 3 kann durch das Ansaugen erzielt werden und/oder durch ein Spreizen der Spreizsegmente 6a wenigstens auf einen zweiten Außendurchmesser D2, bei dem die Spreizsegmente 6a einen umfänglichen Kontakt mit der Etikettenhülse 3 herstellen. Durch einen derartigen umfänglichen Kontakt oder durch ein leichtes Aufdehnen der Etikettenhülse 3 wird die Gleitreibung zwischen der Etikettenhülse 3 und den Spreizsegmenten 6a so stark, dass die Etikettenhülse 3 auf der Spreizeinheit 6 fixiert werden kann.

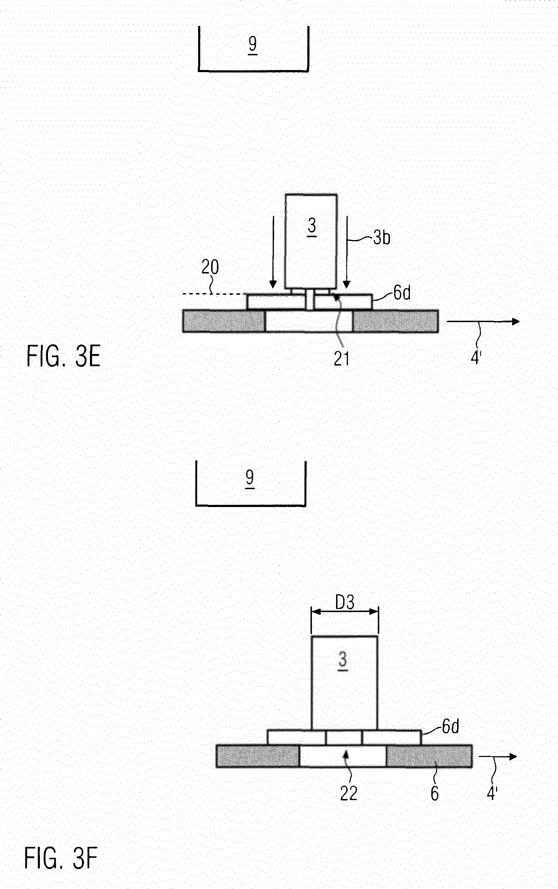

Die Fig. 3E zeigt die Etikettenhülse 3 kurz vor Erreichen einer Anschlagstellung 20, in der die Etikettenhülse 3 auf der unteren Auflageplatte 6d aufliegt. Die Anschlagstellung 20 kann zum Einen ausgehend von der Ruhestellung 19 erreicht werden, indem der Unterdruck P1 abgeschaltet wird und die Spreizsegmente 6a in eine Stellung gebracht werden, die ein Fallen oder Rutschen der Etikettenhülse 3 nach unten bis gegen die Auflageplatte 6d ermöglicht. Dies wird beispielsweise durch einen Luftspalt 21 zwischen der Etikettenhülse 3 und den Spreizsegmenten 6a ermöglicht. Die Anschlagstellung 20 könnte zum Anderen auch durch ein Anschlagen der Etikettenhülse 3 mit einer geeigneten Restgeschwindigkeit 3b erzielt werden, ohne die Etikettenhülse 3 zuvor vollständig abzubremsen. Die Abbremsphase T2 dauert dann gegebenenfalls bis zum unteren Anschlagen der Etikettenhülse 3.

Die Fig. 3F zeigt die Etikettenhülse 3 in einer Dehnstellung 22 im Anschlag gegen die untere Auflageplatte 6d. Das Anfahren der Dehnstellung 22 wird vorzugsweise unmittelbar nach Erreichen der Anschlagstellung 20, gegebenenfalls nach einer optionalen Stabilisierungsphase T3 von nicht mehr als 500 ms, insbesondere höchstens 200 ms, nach dem Anschlagen, eingeleitet.

Nach dem Auseinanderbewegen der Spreizsegmente 6a in einer Dehnphase T4 bis zu einem dritten Außendurchmesser D3, der größer ist als der zweite Außendurchmesser D2 für umfänglichen Kontakt, ist die Etikettenhülse 3 definitionsgemäß in der Dehnstellung 22. Dadurch ist die Etikettenhülse 3 in ihrer Höhenlage und Drehlage für das nachfolgende weitere Aufdehnen bei der Etikettenübergabe stabilisiert. Ausgehend von der Dehnstellung 22 können (nicht dargestellte) Etikettierstellungen der Spreizsegmente 6a in bekannter Weise zur nachfolgenden Übergabe der Etikettenhülse 3 an einen Behälter 2 angefahren werden.

Die Gleitreibung zwischen der Etikettenhülse 3 und den Spreizsegmenten 6a beim Abbremsen wird vorzugsweise so eingestellt, dass der untere Rand 3a der Etikettenhülse 3 zuverlässig gegen die Auflageplatte 6d der Spreizeinheiten 6 anschlägt und gleichzeitig ein Zurückspringen der Etikettenhülse 3 von der Anschlagsposition 20 verhindert wird. Durch das Anschlagen der Etikettenhülse 3 gegen die Auflageplatte 6d kann eine reproduzierbare Höhenlage der Etikettenhülse 3 für die nachfolgende Etikettierung eingestellt werden.

Der Unterdruck P1 könnte an die Luftkanäle 6c auch unmittelbar nach dem Anschlagen angelegt werden, vorzugsweise innerhalb der Stabilisierungsphase T3 und/oder der Dehnphase T4, bis durch die Dehnung der Etikettenhülse 3 allein eine stabile Position im Anschlag gegen die untere Auflageplatte 6d gewährleistet ist.

Das erfindungsgemäße Anfahren der beschriebenen Abbremsstellung 18 und/oder der Dehnstellung 22 der Spreizsegmente 6a und/oder das Anlegen des Unterdrucks P1 beim Abbremsen und/oder Anschlagen der Etikettenhülse 3 dient der Stabilisierung der Etikettenhülse 3 auf der Spreizeinheit 6 in einer vorgegebenen Höhenlage und Drehlage, als Ausgangspunkt für das anschließende Aufdehnen der Etikettenhülse 3 zum Einführen des Behälters 2 und die nachfolgende Etikettenübergabe.

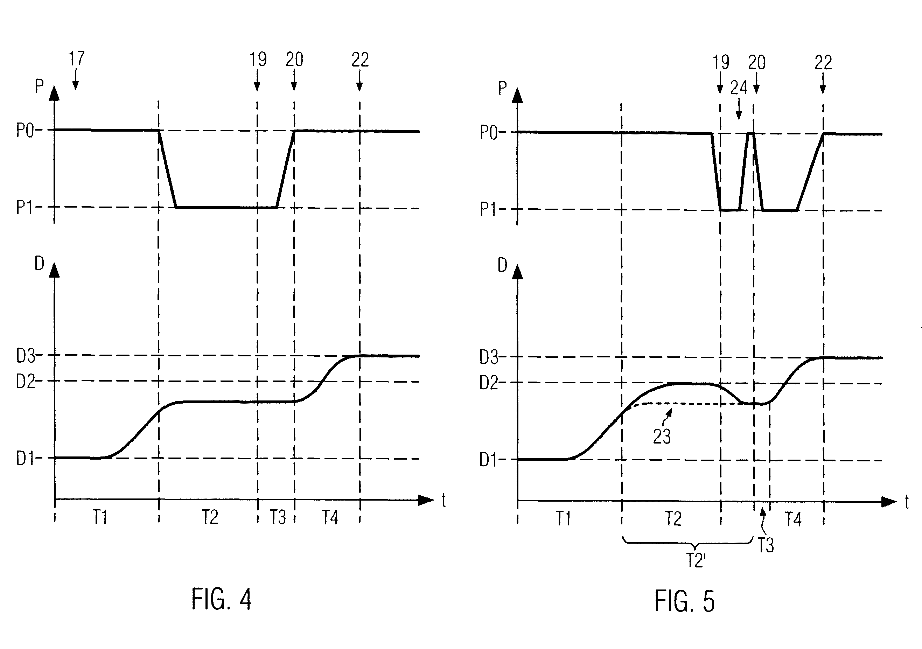

Die Fig. 4 zeigt schematisch und beispielhaft den zeitlichen (Achsenbezeichnung: t) Ablauf des Spreizens der Spreizsegmente 6a anhand des äußeren Durchmessers D zwischen den Spreizsegmenten 6a beim Etikettenspenden ausgehend von der inneren Spendestellung 17 der Spreizsegmente 6a mit dem ersten Außendurchmesser D1 beim Einfangen der Etikettenhülse 3 bis zur Dehnstellung 22 mit dem dritten Außendurchmesser D3. Beim zweiten Außendurchmesser D2 wird umfänglicher Kontakt mit der Etikettenhülse 3 hergestellt. Dieser Wert entspricht näherungsweise dem ungedehnten Etikettendurchmesser. Ebenso ist der zeitliche Verlauf des Drucks P an den Spreizsegmenten 6a ausgehend von einem Umgebungsdruck P0 angedeutet.

Während der Einfangphase T1 werden die Spreizsegmente 6a auseinander gefahren, ohne zunächst eine erfindungsgemäße Abbremswirkung zu erzielen. Zu Beginn der Abbremsphase T2 wird der Unterdruck P1 angelegt und die Etikettenhülse 3 an wenigstens ein Spreizsegment 6a angesaugt. Durch das Auseinanderbewegen der Spreizsegmente 6a wird ferner der Abstand zur Etikettenhülse 3 verringert, so dass die Etikettenhülse 3 zuverlässiger angesaugt und mittels Gleitreibung abgebremst werden kann. Die Etikettenhülse 3 kommt schließlich auf den Spreizsegmenten 6a zur Ruhe, so dass der Unterdruck P1 nach Erreichen der Ruhestellung 19 abgeschaltet werden kann. Da der Außendurchmesser D kleiner als der zweite Außendurchmesser D2 ist, kann die Etikettenhülse 3 nach unten bis an die Anschlagposition 20 rutschen. Durch anschließendes Spreizen der Spreizsegmente 6a bis auf den Außendurchmesser D3 der Dehnstellung 22 wird die Höhenlage und die Drehlage der Etikettenhülse 3 für die nachfolgende Etikettenübergabe fixiert.

Die Fig. 5 verdeutlicht einen alternativen Ablauf mit entsprechenden Bezeichnungen. In diesem Fall wird die Bremswirkung in der Abbremsphase T2 nur durch das Aufspreizen der Spreizsegmente 6a erzielt. Die Spreizsegmente 6a werden schließlich auf den zweiten Außendurchmesser D2 bis zum umfänglichen Kontakt an der Ruhestellung 19 auseinander bewegt, so dass der Unterdruck P1 lediglich ergänzend zur vertikalen Fixierung vor dem Anschlagen zugeschaltet wird. Nach Abschalten des Unterdrucks P1 und Verkleinern des Außendurchmessers D kann die Etikettenhülse 3 über den Luftspalt 21 in die Anschlagposition 20 rutschen. Um diese Position zu stabilisieren, wird der Unterdruck P1 so lange zugeschaltet, bis eine ausreichende Stabilisierung der Höhenlage und der Drehlage der Etikettenhülse 3 allein durch das Dehnen der Etikettenhülse 3 gewährleistet ist, beispielsweise bei Erreichen der Dehnstellung 22. Der Unterdruck P1 wird dann vorzugsweise wieder abgeschaltet, um beim weiteren Aufdehnen für die nachfolgende Etikettierung eine möglichst gleichmäßige Spannung/Dehnung der Etikettenhülse 3 zu begünstigen.

Alternativ ist in der Fig. 5 eine Abbremsphase T2' für ein unvollständiges Abbremsen der Etikettenhülse 3 bis auf eine für das Anschlagen geeignete Restgeschwindigkeit 3b angedeutet. Der zugehörige zeitliche Verlauf 23 des Spreizens und ein möglicher Druckverlauf 24 sind gestrichelt angedeutet. Auch mit einem derartigen Ablauf lässt sich ein Zurückspringen der Etikettenhülsen 3 von den Spreizeinheiten 6 nach dem Anschlagen vermeiden. Auch für die zeitliche Steuerung der Spreizbewegung und/oder des Unterdrucks P1 nach dem Anschlagen sind alternative Abläufe denkbar.

Die in den Fig. 4 und 5 angedeuteten zeitlichen Abläufe ließen sich beliebig kombinieren. In der Praxis können ferner beliebige Geschwindigkeitsverläufe der Spreizsegmente 6a realisiert werden. Hierbei sind die in der Fig. 4 und 5 gezeigten Phasen mit konstanten Spreizgeschwindigkeiten zwischen den ersten bis dritten Außendurchmessern D1 und D3 lediglich beispielhaft. Außerdem könnten die erfindungsgemäßen Spreizstellungen der Spreizsegmente 6a nicht nur an Hand der Außendurchmesser D1 bis D3 definiert werden. Ebenso könnten Umfangslinien um die Spreizsegmente 6a oder dergleichen verwendet werden, beispielsweise bei nichtrotationssymmetrischen Querschnitten.

Je nach Material der Etikettenhülse 3, insbesondere je nach Dehnverhalten und der Gleitreibung und der Haftreibung mit den Spreizsegmenten 6a, lassen sich beliebige zeitliche Abläufe des Spreizens der Spreizsegmente 6a und des Zuschaltens des Unterdrucks P1 an den Luftkanälen 6c für das Spenden der Etikettenhülsen 3 kombinieren. Ebenso könnte die Stärke des Unterdrucks P1 variiert werden.

Das Spreizen der Spreizsegmente 6a und das Zuschalten des Unterdrucks P1 lassen sich sowohl zeitbasiert als auch wegbasiert (positionsbasiert) steuern. Um eine gleichbleibende und zuverlässige Positionierung der Etikettenhülsen 3 auf den Spreizeinheiten 6 auch bei wechselnden Maschinenleistungen zu gewährleisten, könnten die zeitlichen Abläufe beim Spreizen und Ansaugen auch in einer Kombination aus einer wegbasierten und einer zeitbasierten Steuerung angepasst werden. Denkbar wären eine Triggerung des zeitlichen Ablaufs beim Erreichen einer vorgegebenen Transportposition unterhalb des Etikettenspenders 9 und ein zeitbasiertes Anpassen von Schaltzeitpunkten und Stellgeschwindigkeiten der Antriebe und Ventile. Unterschiedliche Transportgeschwindigkeiten des Etikettierrads 4 könnte beispielsweise für das Auffangen der Etikettenhülsen 3 mit den Spreizsegmenten 6a berücksichtigt werden. Zugunsten einer flexiblen Ansteuerung der Spreizeinheiten 6 und der Ansaugung durch die Luftkanäle 6c sind die Antriebe der Spreizeinheiten 6 und die Ventilblöcke 10 zum Schalten des Unterdrucks oder des Überdrucks an den Luftkanälen 6c vorzugsweise elektrisch ansteuerbar.

Durch Überwachung der etikettierten Behälter 2 lassen sich außerdem die zeitlichen Abläufe und/oder die Abbremsstellungen und/oder die Stabilisierungsstellungen der Spreizeinheiten 6a an Änderungen der Produktionsbedingungen und/oder einen Sortenwechsel anpassen.

## Patentansprüche

1. Verfahren zum Etikettieren von Behältern (2) mit Etikettenhülsen (3), bei dem die Etikettenhülsen von oben auf umlaufende Spreizeinheiten (6) mit auseinander bewegbaren Spreizsegmenten (6a) geschossen werden, **dadurch gekennzeichnet, dass** die Etikettenhülsen vor dem unteren Anschlagen an den Spreizeinheiten durch Ansaugen an wenigstens einem der Spreizsegmente und/oder durch Auseinanderbewegen der Spreizsegmente abgebremst werden.

2. Verfahren nach Anspruch 1, wobei an wenigstens einem der Spreizsegmente (6a) ein Unterdruck (P1) angelegt wird, um die Etikettenhülsen (3) vor dem Anschlagen auf dem Spreizsegment zu fixieren.

3. Verfahren nach Anspruch 2, wobei der Unterdruck (P1) nach dem Fixieren der Etikettenhülsen (3) und vor dem Anschlagen abgeschaltet wird.

4. Verfahren nach wenigstens einem der Ansprüche 1 bis 3, wobei die Spreizsegmente (6a) auf Kontakt mit den Etikettenhülsen (3) auseinander bewegt werden, um die Etikettenhülsen vor dem Anschlagen der Etikettenhülsen auf den Spreizsegmenten zu fixieren.

5. Verfahren nach wenigstens einem der Ansprüche 2 bis 4, wobei nach dem Fixieren der Etikettenhülsen (3) ein Luftspalt (21) zwischen den Spreizsegmenten (6a) und den Etikettenhülsen bereit gestellt wird.

6. Verfahren nach wenigstens einem der vorigen Ansprüche, wobei die Etikettenhülsen (3) innerhalb von höchstens 500 ms nach dem unteren Anschlagen durch Auseinanderbewegen der Spreizsegmente (6a) aufgespannt werden.

7. Verfahren nach wenigstens einem der vorigen Ansprüche, wobei die Etikettenhülsen (3) angesaugt werden, während sich der untere Rand (3a) der Etikettenhülsen (3) in der unteren Hälfte der Spreizsegmente (6a) befindet.

8. Verfahren nach wenigstens einem der vorigen Ansprüche, wobei die Spreizsegmente (6a) auseinander gefahren werden, während sich der untere Rand (3a) der Etikettenhülsen (3) in der unteren Hälfte der Spreizsegmente (6a) befindet.

9. Verfahren nach wenigstens einem der vorigen Ansprüche, wobei die vertikale Geschwindigkeit der Etikettenhülsen (3) beim Aufschießen mindestens doppelt so hoch ist wie beim unteren Anschlagen gegen die Spreizeinheiten (6).

10. Verfahren nach wenigstens einem der vorigen Ansprüche, wobei die Etikettenhülsen (3) Stretch-Sleeves sind, deren Grundmaterial insbesondere aus LDPE besteht.

## Claims

1. Method of labelling containers (2) with sleeve labels (3), whereby the sleeve labels are ejected from above onto circulating spreading units (6) having spreading jaws (6a) which can be moved apart from one another, **characterised in that** the sleeve labels are decelerated before making a bottom abutting contact with the spreading units by being sucked onto at least one of the spreading jaws and/or by moving the spreading jaws apart from one another.

2. Method as claimed in claim 1, whereby a negative pressure (P1) is applied to at least one of the spreading jaws (6a) in order to fix the sleeve labels (3) before making an abutting contact with the spreading jaw.

3. Method as claimed in claim 2, whereby the negative pressure (P1) is switched off after fixing the sleeve labels (3) and before the abutting contact is made.

4. Method as claimed in at least one of claims 1 to 3, whereby the spreading jaws (6a) are moved apart from one another on contact with the sleeve labels (3) in order to fix the sleeve labels before the sleeve labels make the abutting contact with the spreading jaws.

5. Method as claimed in at least one of claims 2 to 4, whereby after fixing the sleeve labels (3), an air gap (21) is provided between the spreading jaws (6a) and the sleeve labels.

6. Method as claimed in at least one of the preceding claims, whereby the sleeve labels (3) are stretched open within at most 500 ms of making the bottom abutting contact by moving the spreading jaws (6a) apart from one another.

7. Method as claimed in at least one of the preceding claims, whereby suction is applied to the sleeve labels (3) whilst the bottom edge (3a) of the sleeve labels (3) is disposed in the bottom half of the spreading jaws (6a).

8. Method as claimed in at least one of the preceding claims, whereby the spreading jaws (6a) are moved apart from one another whilst the bottom edge (3a) of the sleeve labels (3) is disposed in the bottom half of the spreading jaws (6a).

9. Method as claimed in at least one of the preceding claims, whereby the vertical speed of the sleeve labels (3) on ejecting is at least twice as high as when making the bottom abutting contact with the spreading units (6).

10. Method as claimed in at least one of the preceding claims, whereby the sleeve labels (3) are stretch sleeves, the base material of which is LDPE in particular.

## Revendications

1. Procédé pour étiqueter des récipients ou contenants (2) à l'aide de manchons d'étiquette (3), d'après lequel les manchons d'étiquette sont envoyés par le haut sur des unités d'évasement (6) en révolution et comportant des segments d'évasement (6a) pouvant être déplacés de manière à s'écarter mutuellement, **caractérisé en ce que** les manchons d'étiquette, avant la venue en butée inférieure contre les unités d'évasement, sont freinés par aspiration contre au moins l'un des segments d'évasement et/ou par écartement des segments d'évasement.

2. Procédé selon la revendication 1, d'après lequel on applique une dépression (P1) à au moins l'un des segments d'évasement (6a), pour fixer les manchons d'étiquette (3) sur le segment d'évasement avant leur venue en butée.

3. Procédé selon la revendication 2, d'après lequel la dépression (P1) est interrompue après la fixation des manchons d'étiquette (3) et avant la venue en butée.

4. Procédé selon l'une au moins des revendications 1 à 3, d'après lequel les segments d'évasement (6a) sont écartés mutuellement suite au contact avec les manchons d'étiquette (3), en vue de fixer les manchons d'étiquette sur les segments d'évasement avant la venue en butée des manchons d'étiquette.

5. Procédé selon l'une au moins des revendications 2 à 4, d'après lequel après la fixation des manchons d'étiquette (3), un interstice d'air (21) est formé entre les segments d'évasement (6a) et les manchons d'étiquette.

6. Procédé selon l'une au moins des revendications précédentes, d'après lequel les manchons d'étiquette (3) sont évasés au plus tard 500 ms après leur venue en butée inférieure, par écartement mutuel des segments d'évasement (6a).

7. Procédé selon l'une au moins des revendications précédentes, d'après lequel les manchons d'étiquette (3) sont aspirés pendant que le bord inférieur (3a) des manchons d'étiquette (3) se trouve dans la moitié inférieure des segments d'évasement (6a).

8. Procédé selon l'une au moins des revendications précédentes, d'après lequel les segments d'évasement (6a) sont écartés mutuellement pendant que le bord inférieur (3a) des manchons d'étiquette (3) se trouve dans la moitié inférieure des segments d'évasement (6a).

9. Procédé selon l'une au moins des revendications précédentes, d'après lequel la vitesse verticale des manchons d'étiquette (3), lors de leur envoi sur les unités d'évasement, est au moins d'une valeur double de celle lors de leur venue en butée inférieure contre les unités d'évasement (6).

10. Procédé selon l'une au moins des revendications précédentes, d'après lequel les manchons d'étiquette (3) sont des manchons rétractables (strechsleeves) dont le matériau de base est constitué notamment de polyéthylène basse densité à savoir PEBD (LDPE en anglais).
